# EUROPEAN PATENT APPLICATION

(11) **EP 1 748 034 A1**
(43) Date of publication of application: **31.01.2007**
(21) Application number: 05737264.1
(22) Date of filing: 28.04.2005
(51) Int. Cl.: C03C 17/36, B60S 1/58

(54) **GLASS PANE WITH CONDUCTIVE PRINT AND METHOD OF MANUFACTURING THE SAME**

(30) Priority: 28.04.2004 JP 2004133201
(71) Applicant: Asahi Glass Company, Limited, Chiyoda-ku, Tokyo 100-8405 (JP)
(72) Inventor: NEKODA, Takashi; c/o Asahi Glass Company, Limited, Chiyoda-ku, Tokyo 1008405 (JP); NAGAOKA, Teruji; c/o Asahi Glass Company, Limited, Chiyoda-ku, Tokyo 1008405 (JP); SHIBATA, Takeshi c/o Asahi Glass Company, Limited, Chiyoda-ku, Tokyo 1008405 (JP)
(74) Representative: Müller-Boré & Partner Patentanwälte
(86) International application number: PCT/JP2005/008232
(87) International publication number: WO 2005/105691

(57) **Abstract**

A glass plate having printed conductive members, comprises a functional strip (30) being a printed conductive member, a first bus bar (20a) electrically connected to an end of the functional strip and being a printed conductive member, a second bus bar (20b) electrically connected to the other end of the functional strip and being a printed conductive member and a printed dark ceramics (13) provided along the periphery of a glass plate (10), wherein the bus bars (20a, 20b) are provided on the printed dark ceramics and have cut-out portions (23a, 24a) in which the printed dark ceramics is exposed. Generation of uneven temperature distribution due to the difference of heat absorptivities between the printed dark ceramics and the bus bars is prevented, whereby a glass plate having printed conductive members is provided by more simple method and at lower cost than before.

## Description

### TECHNICAL FIELD

The present invention relates to a glass plate with printed conductive members and a method for producing the glass plate, in particular, to a glass plate to be used for a rear glass for automobiles and having an antifogging function and/or an antenna function, and to a method for producing such a glass plate.

### BACKGROUND ART

Heretofore, there has been a rear glass for automobiles having an indoor side surface provided with a defogger or a glass antenna being a printed conductive member. For example, a defogger is constituted by a plurality of heating resistor strips provided laterally and in parallel with each other over substantially an entire rear glass, and two bus bars for supplying a power to terminals of the heating resistor strips. The two bus bars are provided on both left and right sides so as to be opposed to each other, and having a width larger than that of the heating resistor strips to supply sufficient power to the heating resistor strips. A DC current is applied between the bus bars to heat the heating resistor strips to warm the rear glass to prevent poor visibility due to dew condensation.

Such bus bars and heating resistor strips are formed by kneading a glass frit and silver powder with an organic binder to form a silver paste, screen-printing the silver paste on a glass plate, and baking the printed silver paste. Since the baked silver paste has a whitish color and thus shows up (here, the silver paste has a brown color at an interface with the glass plate by a chemical effect), shapes and arrangement of heating resistor strips and bus bars are important in design of an automobile.

Meanwhile, in recent years, providing of printed dark ceramics in the periphery of glass plate, is conducted, and printing of the bus bars on the printed dark ceramics is conducted to prevent the bus bars from being exposed to the outside, to improve a design. The printed dark ceramics is, in the same manner as the silver paste, formed by printing and baking a known paste (hereinafter referred to as dark ceramic paste) prepared by kneading a metal powder (an oxide of e.g. chromium, cobalt or bismuth) showing black color and a glass frit with an organic binder.

### DISCLOSURE OF THE INVENTION

### PROBLEMS TO BE SOLVED BY THE INVENTION

However, if a white conductive material is printed on a printed dark ceramics, due to the difference between their heat absorptivities, there is a case where a trouble occurs at a time of bending a glass plate. Since heating of a glass plate is conducted mainly by a radiation heating using e.g. an electric heater, if there is a color portion on a surface of the glass plate, only the color portion is heated excessively. Particularly, since the printed dark ceramics has a color close to black, its heat absorptivity is extremely large. On the other hand, a printed conductive member having a color close to white has low heat absorptivity, and thus, there is a large difference between their heat absorptivities.

On a rear glass, a dark ceramics is printed and a conductive material such as one forming bus bars is printed on the printed dark ceramics, and thereafter, these members are baked in a heating furnace and the glass plate is heated to a predetermined bending temperature. Then, the heated glass plate is bent to have a curved shape by e.g. a press, and quenched by air cooling to produce a physically tempered glass.

Thus, a heating process is carried out in a production of rear glass for automobiles, but since there is a large difference between heat absorptivities of the printed dark ceramics and the printed conductive member, it is difficult to heat the glass plate uniformly. Uneven temperature distribution formed in the glass plate causes local unevenness of viscosity in the glass plate and causes a problem that the glass plate is not bent to have a predetermined shape.

Then, heretofore, in order to solve such problems, it has been attempted to reduce the difference between heat absorptions of the bus bars and the printed dark ceramics by reducing the line width of the bus bars as small as possible. However, since the bus bars are required to supply a power to the resistor strips, if the line width is too small, their electric resistances increase and function of bus bars cannot be obtained. Then, it has been attempted to print the bus bars a plurality of times to laminate together to increase the thickness of the bus bars, to reduce the electric resistance.

However, the plurality of printings increase steps (printing and drying of printed conductive member) to increase the production cost of the product. Further, when the same patterns are printed to be laminated, there is a case that the positions of the printed patterns are shifted, which may cause deterioration of product yield.

Further, it is considered to reduce the difference of heat absorptivities by further printing a dark ceramic on the bus bars. However, this method is, for the same reason as the above-mentioned method, not a practical method since the method increases the number of printing steps (printing and drying of dark ceramic after the printing and drying of conductive member) to increase production cost of the product.

Further, it is considered to make the printed conductive member dark by mixing a pigment or a dye into the silver paste and thereby making the silver paste dark. However, due to a balance of electric resistance and color, a practically-usable silver paste has not been developed yet.

By the way, various improvements have been made to bus bars heretofore, for example, in an invention described in JP-A-55-32732, a problem that sulfur contained in a gasket covering a bus bar is solved out to increase electric resistance of the bus bar, is solved by providing a main bus bar not covered with a gasket and an auxiliary bus bar covered with a gasket in parallel with the main bus bar, whereby a problem of electric resistance is solved.

Further, in an invention described in a microfilm of Japanese Utility Application 49-7182, a problem that sufficient metal plating required for heating resistor strips and bus bars having respective widths is not possible in a step of metal plating on a printed conductive member, which causes increase of electric resistance, is solved by constituting each bus bar by at least two strips connected together so that a large amount of plating metal is provided on the bus bar to solve the problem of the increase of electric resistance.

However, these known documents may be interpreted to disclose providing of a cut-out portion in a bus bar, but they simply solve the problem of increase of electric resistance, and there is no description or suggestion as to providing of a bus bar on a printed dark ceramics in these documents. Further, they do not disclose the problem to be solved by the present invention (a problem occurs at a time of bending a glass plate if bus bars are formed on a printed dark ceramics) at all. Namely, there has been no effective means to solve the problem to be solved by the present invention.

The present invention is to solve such problems in prior arts, and it is an object of the present invention to suppress occurrence of uneven temperature distribution due to the difference between heat absorptivities of a printed dark ceramics and bus bars, and to provide a glass plate having a printed conductive member more simply at lower cost than before.

### MEANS FOR SOLVING THE PROBLEM

To achieve the above object, the present invention provides a glass plate having printed conductive members, comprising a glass plate, a functional strip being a printed conductive member, a first bus bar electrically connected to an end of the functional strip and being a printed conductive member, a second bus bar electrically connected to the other end of the functional strip and being a printed conductive member and a printed dark ceramics provided along the periphery of the glass plate, wherein the bus bars are each provided on the printed dark ceramics and has a cut-out portion in which the printed dark ceramics is exposed.

Further, in an embodiment according to the present invention, the bus bars each has at least two cut-out portions separated from each other by the same material as the bus bar. Further, in an embodiment according to the present invention, the functional strip functions as a heating resistor strip or a glass antenna. Further, in another embodiment according to the present invention, a fine pattern made of the same material as the printed conductive member, is provided in the cut-out portion. Further, in an embodiment according to the present invention, the glass plate is to be employed as a rear glass for automobiles.

Further, the present invention provides a process for producing a glass plate having printed conductive members, comprising (a) a step of printing a dark ceramic paste along the periphery of a glass plate, (b) a step of printing bus bars each made of a silver paste and having a cut-out portion, on the printed dark ceramic paste and printing a functional strip made of a silver paste on a surface of the glass plate where the dark ceramic paste is not printed, (c) a step of heating the glass plate on which the bus bar and the functional strip are printed, (d) a step of bending the heated glass plate, and (e) a step of tempering the bent glass plate.

### EFFECTS OF THE INVENTION

In the present invention, by providing cut-out portions in a printed conductive member formed on a printed dark ceramics, it is possible to prevent forming of a local printed conductive member having a large area, and to prevent heat-absorption of bus bars in a heating treatment for bending a glass plate. Accordingly, the present invention provides effects that it becomes possible to prevent uneven temperature distribution (uneven viscosity) in a glass plate, and to provide a glass plate having an excellent quality causing little distortion of transmission image and reflection image.

### BRIEF DESCRIPTION OF THE DRAWINGS

Fig. 1: A front view of a glass plate having printed conductive members showing an embodiment of the present invention.
Fig. 2: A front view of a bus bar showing an embodiment of the present invention.
Figs. 3(a) to 3(b): Front views each showing an embodiment of the bus bar according to the present invention.
Figs. 4(a) and 4(b): Front views showing a bus bar having a short-circuit portion and a bus bar having no short cut portion respectively.
Fig. 5: A side view showing a connector to be connected with a terminal of a bus bar.
Fig. 6: A flowchart showing an embodiment of a production process of a glass plate having printed conductive members according to the present invention.
Figs. 7(a) and 7(b): Front views showing bus bars of an example of the present invention and a comparative example respectively.

### BEST MODE FOR CARRYING OUT THE INVENTION

Then, an embodiment of the present invention is described.

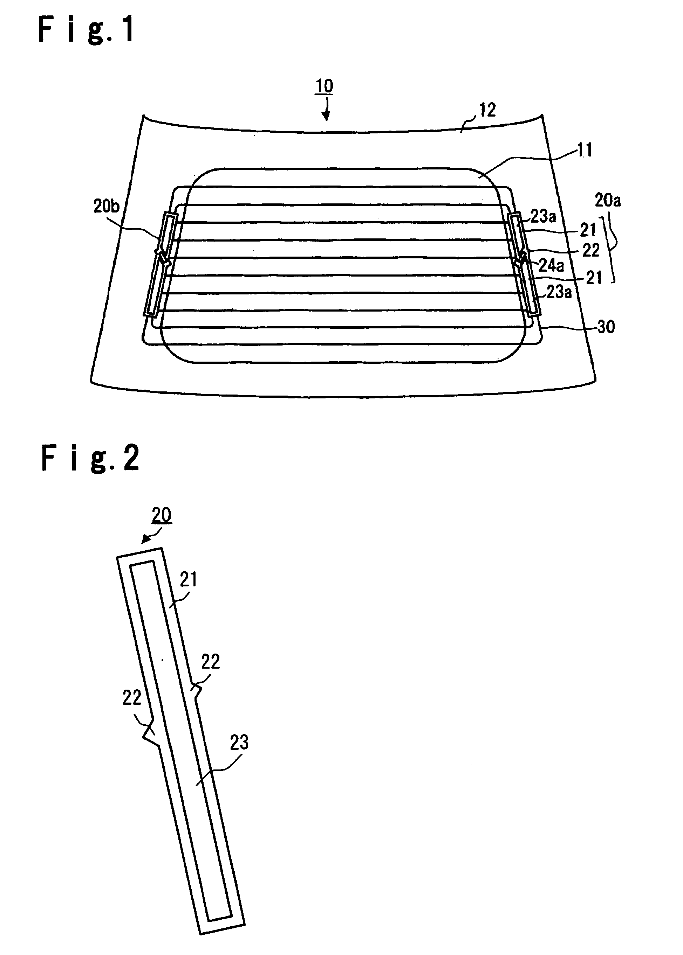

Fig. 1 is a front view of a glass plate having printed conductive members showing an embodiment of the present invention. As shown in Fig. 1, a curved glass plate 10 has a printed dark ceramics 12 formed to have a frame shape along a periphery on an indoor side surface. On the printed dark ceramics 12, two long bus bars 20a and 20b formed by baking a screen-printed silver paste, are provided along both side ends of the glass plate so as to form a trapezoid-side-like layout. The bus bars 20a and 20b each has a long rectangular external shape constituted by a conductive portion 21 provided with a cut-out portion 23a in the center portion of the conductive portion 21. When the bus bars 20a and 20b are printed on the printed dark ceramics, the printed dark ceramics is exposed in the cut-out portions 23a.

Further, in the vicinity of the center in a longitudinal direction of each of the bus bars 20a and 20b, a terminal portion 22 is provided to be connected with a power supply unit (not shown). The bus bars 20a and 20b are each connected with the power supply unit via a connector to be connected with the terminal portion 22. There are a case where the connector supplies a power supplied from the power supply unit to only one point of the terminal 22 (one power supply point), and a case where the connector supplies the power to at least two points (at least two power supply points). Further, a plurality of (10 in this embodiment) of heating resistor strips 30 (which can be used also as an AM antenna) are connected in series between two bus bars 20a and 20b opposed to each other. Thus, by providing a cut-out portion in each bus bar, it is possible to suppress generation of uneven temperature distribution that tends to occur at a time of heating treatment, and to improve precision of bending of a glass plate.

Then, another embodiment of the present invention is described. A bus bar according to the present invention is not limited to one shown in Fig. 1, and one having the following construction may be employed.

Fig. 2 is a front view showing an embodiment of a bus bar according to the present invention. This figure shows a pattern of a bus bar mainly employed for a case where the bus bar has two power supply points. The bus bar 20 shown in Fig. 2 has a long substantially rectangular external shape and has a conductive portion 21 provided with a cut-out portion 23. Further, terminal portions 22 are provided on both sides of the conductive portion 21 in substantially the central portion in a longitudinal direction of the bus bar. To the terminal portions 22, a connector is connected to supply a power to the terminal portions 22.

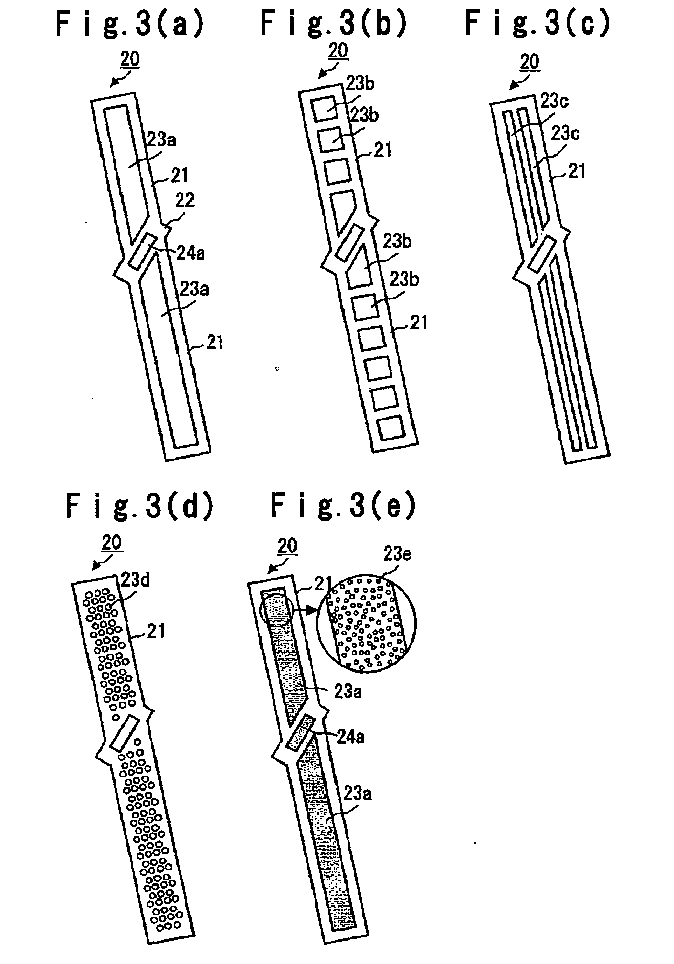

Further, Figs. 3(a) to 3(e) are front views showing other embodiments of bus bars according to the present invention. They are patterns of bus bars mainly employed for cases where only one power supply point is provided. The bus bar 20 shown in Fig. 3(a), is an enlarged view of the bus bar shown in Fig. 1. The bus bar 20 has a long substantially rectangular external shape and has a conductive portion 21 provided with cut-out portions 22a. Further, in substantially central portion of the bus bar in a longitudinal direction, a terminal portion 22 having a cut-out portion 24a, is provided. Further, the bus bar 20 shown in Fig. 3(b) has a conductive portion 21 provided with a plurality of cut-out portions 23b smaller than that shown in Fig. 3(a), along a longitudinal direction of the bus bar.

Further, the bus bar 20 shown in Fig. 3(c) is provided with a plurality of cut-out portions 23c arranged in parallel along a longitudinal direction of the bus bar 20. Further, a bus bar 20 shown in Fig. 3(d), is provided with a plurality of circular small cut-out portions 23d scattered over the entire bus bar. Thus, the bus bar 20 has at least two cut-out portions separated from each other by the same material as the bus bar, namely a silver paste, and these at least two cut-out portions separated from each other can be formed at the same time of printing the bus bar. Further, the bus bar shown in Fig. 3(e) has the same construction as the bus bar shown in Fig. 3(a), and further provided with a large number of small spots 23e in the cut-out portions 23a and 24a. The spots 23e are each made of the same silver paste as the material of the bus bar, and formed by printing at the same time of the printing of bus bar. To a terminal portion 22 of each of the bus bars of Figs. 3(a) to 3(e), a connector is connected to supply a power to the terminal portion 22.

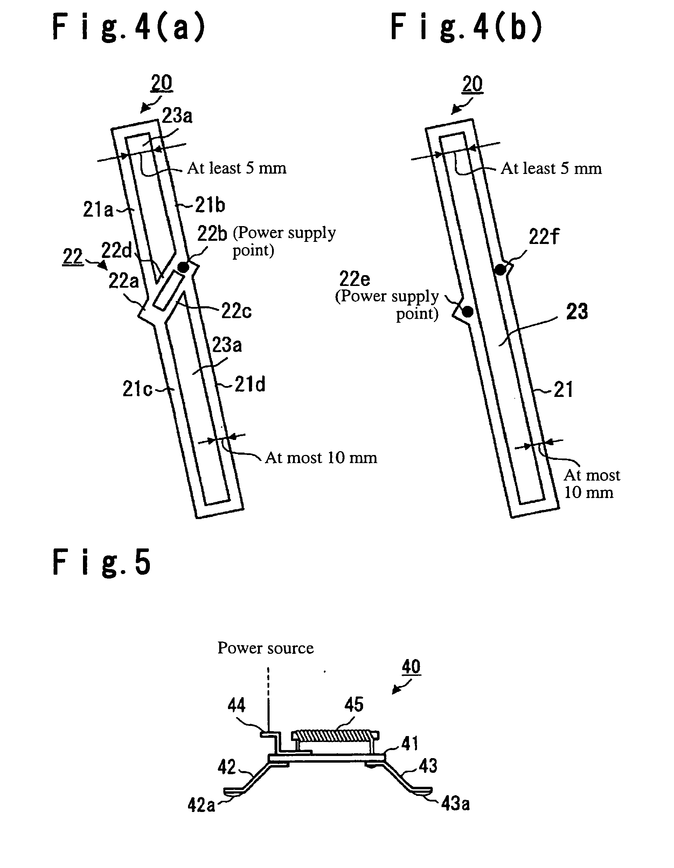

Fig. 4(a) is a front view showing a bus bar having a short circuit portion and Fig. 4(b) is a front view showing a bus bar having no short circuit portion. As shown in Fig. 4(a), in a case where a long cut-out portion 23a is provided in a bus bar 23a, by providing short circuit portions 22c and 22d electrically connecting opposing two conductive portions 21a and 21b and connecting conductive portions 21c and 21d, it is possible to put power supply points together to one power supply point. Further, in a case where two power supply points are provided, the short circuit portions become unnecessary as shown in Fig. 4(b).

Here, in the cases of bus bars shown in Figs. 4(a) and 4(b), the width of the cut-out portions 23a and 23 is preferably at least 5 mm, more preferably at least 10 mm. Further, the width of each of the conductive portions 21a, 21b, 21c, 21d and 21 is preferably at most 10 mm, and the proportion of "area of printed dark ceramics"/"area of printed conductive member" in a width direction of bus bar is preferably from 3/7 to 7/3.

On the other hand, to the bus bars of Figs. 4(a) and 4(b), for example, a connector shown in Fig. 5 is connected. A connector 40 is constituted by a substrate 41 made of an epoxy resin, leg portions 42 and 43 made of a metal and soldered to the substrate, solders 42a and 43a provided to the ends of the leg portions 42 and 43 respectively, a terminal portion 44 to be electrically connected with a power supply unit (not shown) and a coil 45 electrically connected with the terminal portion 44. The solders 42a and 43a are connected with the terminal portions 22a and 22b respectively, or they are connected with the terminal portions 22e and 22f respectively. In a case where power supply points are put together to one power supply point as shown in Fig. 4(a), only the leg portion 43 is electrically connected with the coil 45 and only the terminal portion 22b functions as the power supply point. Namely, a power supplied from an external power source is supplied to the bus bar 20 via the terminal portion 44, the coil 45, the leg portion 43, the solder 43a and the terminal portion 22b. The coil 45 and the leg portion 43 are electrically connected via a via hole (not shown) opened through the substrate 41. Further, in a case where two power supply points are provided as shown in Fig. 4(b), the leg portions 42 and 43 are electrically connected with the coil 45, and the terminal portions 22e and 22f function as power supply points.

Then, a process for producing the glass plate shown in Fig. 1, is described.

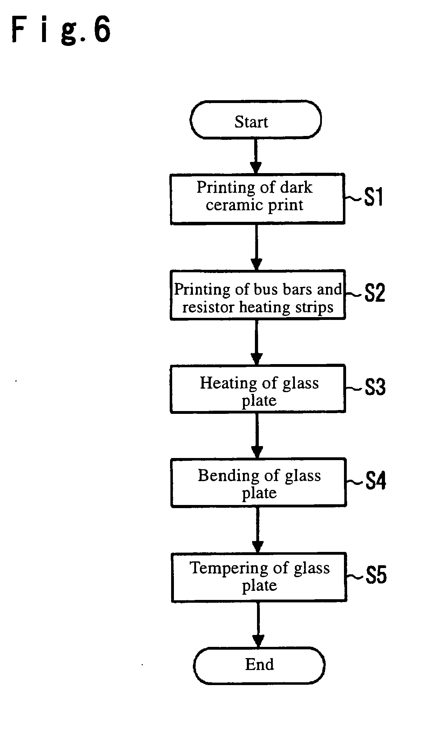

Fig. 6 is a flowchart showing an embodiment of the process for producing a glass plate having printed conductive members according to the present invention. First of all, on peripheral portions of a glass plate that is cut into a desired shape and whose end portions are chamfered, a raw material (dark ceramic paste of a printed dark ceramics) is screen-printed (step S1). Then, the printed dark ceramic paste is dried, and bus bars having cut-out portions are screen-printed on the dried dark ceramic paste (step S2). At the time of printing the bus bars, a printed conductive member such as heating resistor strip, is screen-printed at the same time.

Then, the glass plate on which the printed dark ceramics and the printed conductive members are printed, is conveyed into a heating furnace to bake e.g. the printed conductive members, and to heat the glass plate to a predetermined bending temperature (step S3). Then, the heated glass plate is placed on a press ring, and pressed downwardly against a mold having a molding surface, to carry out bending (step S4). The bent glass plate is immediately quenched by air-cooling to produce a tempered glass (step S5). Thus, in the present invention, only one time of printing of conductive members such as bus bars needs to be carried out, which solves problems of cost and yield of prior arts.

### EXAMPLES

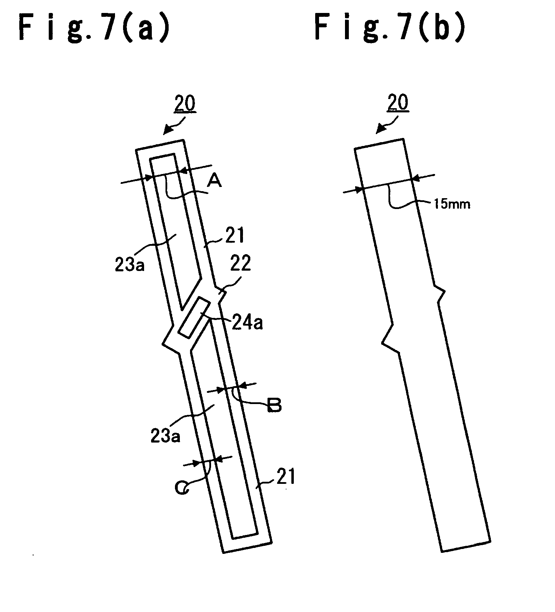

Then, Examples of the present invention are described. With respect to heating and forming a rear glass for automotive shown in Fig. 1, comparative evaluation was conducted as to the possibility of forming the glass into a predetermined shape (1) in a case of forming bus bars having a shape of Fig. 7(a) as an Example of the present invention on a printed dark ceramics formed along the periphery of the rear glass, (2) in a case (Comparative Example) of forming a conventional bus bar shape shown in Fig. 7(b) on the printed dark ceramics, and (3) in a case (Reference Example) of forming no bus bar. Here, in Fig. 7, portions in common with those of Fig. 3(a) are designated as the same symbols.

Rear glasses having bus bars of the above (1) or (2) to be employed for the evaluation, are prepared by forming silver prints having bus bar shapes of the above (1) or (2) on a printed dark ceramics, heating the glass plates to a predetermined bending temperature, and bending the heated glass plates to have a predetermined curved shape by a press. The rear glass of (3) having no bus bar is produced by heating and forming a glass plate on which only a printed dark ceramics is formed by an equivalent method to the above.

In the evaluation, a glass plate to be evaluated is placed in front of a zebra board (a plate having a black and white stripe pattern) so that the pattern of the zebra board is projected on the glass plate to evaluate whether or not the black and white lines (stripe pattern) show a predetermined curve (reflection distortion).

In a case where uneven temperature distribution was present in a glass plate at a time of bending, the black and white lines projected on the glass plate are observed to be distorted, and in such a case, it is judged that the glass plate is not formed to have a predetermined shape. A glass plate of (3) on which only a dark ceramics is printed, is formed to have a predetermined shape, and thus, the glass plate is used as a reference in the evaluation.

With respect to the shape of the bus bar of (1), provided that the width of the cut-out portion 23a of the bus bar is designated as A, the width of the conductive portion 21 located in a periphery side of the glass plate is designated as B and the width of the conductive portion 21 in the center side of the glass plate is designated as C as shown in Fig. 7(a), the width of the cut-out portion and the conductive portion are changed as follows for the evaluation: A=5 mm, B=5 mm and C=10 mm for (1)-1, A=5 mm, B=5 mm and C=5 mm for (1)-2, A=5 mm, B=5 mm and C=3 mm for (1)-3, A=10 mm, B=10 mm and C=10 mm for (1)-4, and A=10 mm, B=5 mm and C=10 mm for (1)-5.

The bus bar of (2) has a width of 15 mm and has a shape having no cut-out portion as shown in Fig. 7(b).

In the glass plate of (2), the pattern (black and white lines) of zebra board projected on the glass plate was significantly distorted, which indicates that a temperature distribution was formed on the peripheral portion of the bus bar at the time of heating and forming, whereby it was not possible to form the glass plate to have a desired shape. On the other hand, on each of the glass plates of (1)-1 to (1)-5, the pattern (black and white lines) of zebra board projected on the glass plate has a predetermined curved shape. Further, in each of the glass plates of (1)-1 to (1)-5, the pattern of zebra board projected on the glass plate is approximately the same as that of the glass plate of (3), and it is understandable that uneven temperature distribution at the time of heating was reduced. In particular, in the glass plate of (1)-1, the pattern of zebra board projected on the glass plate was completely the same as that projected on the glass plate of (3), which indicates that the difference of heat absorptivities between the printed dark ceramics and the printed conductive member was substantially disappeared.

Further, the curve in the glass plate of (1)-2 was less distorted than that of the glass plate of (1)-3, and the curve in the glass plate of (1)-4 was less distorted than that of the glass plate of (1)-5, which indicates that the width of cut-out portions have to be at least 3 mm, more preferably at least 5 mm, and the width of conductive portion of a bus bar has to be at most 10 mm, more preferably at most 5 mm.

### INDUSTRIAL APPLICABILITY

As described above, the present invention can provide a curved glass plate suitable for producing a rear glass for automobiles having a defogger and/or a glass antenna (e.g. for AM, FM, GPS, VICS or ETC). Further, the present invention can be applied not only to application for automobiles, but also to window glasses to be used for e.g. railroad vehicles, airplanes, ships and buildings, and to other glass plates having printed conductive members.

The entire disclosure of Japanese Patent Application No. 2004-133201 filed on April 18, 2004 including specification, claims, drawings and summary is incorporated herein by reference in its entirety.

## Claims

1. A glass plate having printed conductive members, comprising a glass plate, a functional strip being a printed conductive member, a first bus bar electrically connected to an end of the functional strip and being a printed conductive member, a second bus bar electrically connected to the other end of the functional strip and being a printed conductive member and printed dark ceramics provided along the periphery of the glass plate, wherein the bus bars are each provided on the printed dark ceramics and has a cut-out portion in which the printed dark ceramics is exposed.

2. The glass plate having printed conductive members according to Claim 1, wherein the bus bars each has at least two cut-out portions separated from each other by the same materials as the bus bar.

3. The glass plate having printed conductive members according to Claim 1 or 2 wherein the functional strip functions as a heating resistor strip or a glass antenna.

4. The glass plate having printed conductive members according to Claim 1, 2 or 3, wherein a fine pattern made of the same material as the printed conductive member, is provided in the cut-out portion.

5. A glass plate having printed conductive members according to any one of Claims 1 to 4, wherein the glass plate is to be employed as a rear glass for automobiles.

6. A process for producing a glass plate having printed conductive members, comprising (a) a step of printing a dark ceramic paste along the periphery of a glass plate, (b) a step of printing bus bars each made of a silver paste and having a cut-out portion, on the printed dark ceramic paste and printing a functional strip made of a silver paste on a surface of the glass plate where the dark ceramic paste is not printed, (c) a step of heating the glass plate on which the bus bar and the functional strip are printed, (d) a step of bending the heated glass plate, and (e) a step of tempering the bent glass plate.
